# EUROPEAN PATENT SPECIFICATION

(11) **EP 4 250 955 B1**
(45) Date of publication and mention of the grant of the patent: **25.02.2026**
(21) Application number: 21839692.7
(22) Date of filing: 30.11.2021
(51) Int. Cl.: A23L 5/10, A23L 19/18, A47J 27/04, A47J 37/04, A47J 37/06, A47J 37/12

(54) **APPARATUS FOR COOKING FOOD**
VORRICHTUNG ZUM KOCHEN VON LEBENSMITTELN
APPAREIL DE CUISSON D'ALIMENTS

(30) Priority: 30.11.2020 IT 202000029090
(43) Date of publication of application: 04.10.2023
(73) Proprietor: Atihc S.r.l., 37045 Legnago Verona (IT)
(72) Inventor: COLTRO, Marco, 37045 Legnago (VR) (IT); SUMAN, Alessio, 37045 Legnago (VR) (IT); VERZÈ, Ivan, 37045 Legnago (VR) (IT)
(74) Representative: Manzella & Associati
(86) International application number: PCT/IT2021/050387
(87) International publication number: WO 2022/113145

(56) References cited:
- EP-A1- 1 371 313
- EP-A1- 3 442 386
- EP-A2- 0 425 159
- WO-A1-2017/178650
- WO-A1-93/11690
- WO-A1-95/08288
- JP-A- 2020 010 778
- US-A- 4 457 947
- US-A1- 2007 240 702

## Description

### Technical field

The present invention relates to an apparatus for frying food.

### Prior art

Methods for treating food have been known for some time, which involve combining different types of cooking in order to obtain predetermined chemical-physical characteristics of the products.

By way of example, treatment methods are known which provide for frying food in a fatty substance, consisting for example of oil, and then carrying out a treatment with superheated steam to reduce the oil content and thus make the fried food more healthy. Patent EP0456747 and patent application WO2006/047129 illustrate methods for producing fried potatoes which involve frying in oil and performing a treatment with superheated steam.

A type of apparatus for frying food in oil which also allows the use of superheated steam is illustrated in patent application JP2020010778. The apparatus includes a tank containing a predetermined amount of oil and tank heating means for heating the oil. A removable lid is placed above the tank for placing products inside the tank. The apparatus includes a generator of superheated steam which is adapted to introduce superheated steam into the tank containing the oil through an opening made on one wall of the tank.

This type of apparatuses has some disadvantages. A disadvantage is related to the fact that the oil is contaminated due to the interaction with the condensate that derives from the contact of the superheated steam with fresh or frozen products. Contamination of the oil involves the occurrence of a non-optimal and poorly repeatable frying. A further disadvantage of oil contamination is that it is necessary to replace it more frequently.

Also, a complained problem is that the frying of food in the tank can be uneven.

### Disclosure

The aim of the present invention is that of solving the aforementioned problems, devising an apparatus for frying food which allows different types of cooking food in an optimal way.

As part of this aim, it is an object of the present invention to devise an apparatus that is easy to maintain and manage.

A further object of the present invention is to devise an apparatus which has an increased safety for the users.

A further object of the invention is to provide an apparatus for cooking food with a simple constructive and functional concept, with reliable operation, versatile use, and relatively low cost.

The aforementioned purposes are achieved, according to the present invention, by the apparatus according to claim 1.

The apparatus for frying food comprises a casing that defines a cooking chamber inside thereof, suitable for containing the food; a tank connected to said cooking chamber, adapted to contain a predetermined quantity of oil, said tank comprising heating means for heating said oil and sensor means for monitoring the temperature of said oil, said sensor means being configured to send data relating to the temperature of said oil to a control unit; a device for generating superheated steam connected to said cooking chamber, said device for generating superheated steam comprising a steam generation member associated with a superheater, said device for generating superheated steam being configured to generate a predetermined amount of superheated steam to be introduced into said cooking chamber; a feeding assembly connected to said tank, said feeding assembly being activable, on command of said control unit, to convey said heated oil from said tank to said cooking chamber. The apparatus, thanks to the provision of an oil tank and a separate cooking chamber suitable for containing food, allows frying in oil and cooking with superheated steam separately. The ability to carry out these types of cooking separately improves the quality of frying as there is no interaction between the oil and the steam with a consequent limited degradation of the oil. An advantage of the limited degradation of the oil is that the oil can be replaced less frequently.

An advantage arising from the possibility of carrying out different types of cooking is that of being able to improve predetermined characteristics of the food and, in particular, to improve the healthiness of food thanks to the cooking with superheated steam.

Preferably, said tank is insulated from the external environment.

Preferably, said tank is arranged outside of said casing.

Advantageously, said apparatus comprises said control unit.

Advantageously, according to the invention, said control unit is configured to control said heating means, on the basis of the data sent by said sensor means, so as to keep said oil at a predetermined temperature, which is suitable for frying food. The fact that the oil is kept at the desired temperature in the tank, ready for use, reduces the time required for frying as it is sufficient to convey the oil into the cooking chamber.

Advantageously, according to the invention, said control unit is configured to selectively control said feeding assembly to supply a predetermined quantity of heated oil to said cooking chamber and is configured to control said device for generating superheated steam to insert superheated steam into said cooking chamber. Basically, the control unit controls the insertion of a predetermined amount of heated oil in said cooking chamber and the generation and insertion of a predetermined amount of superheated steam in said cooking chamber.

The control unit permits to obtain an automatic apparatus as it is selected, depending on the cooking method desired by the user, frying in oil or cooking with superheated steam.

The fact that the control unit is configured to control the insertion of oil into the cooking chamber or the insertion of superheated steam means that the heated oil and the superheated steam are not present in the cooking chamber at the same time, therefore no interactions occur between the oil and the vapor, with a consequent advantage in terms of limiting the degradation of the oil.

The control unit includes an electronic processor and a memory that can be read by said electronic processor.

Preferably said heating means for said oil comprise at least one electric resistance.

Preferably, said feeding assembly comprises a pump connected to said tank and valve means.

Preferably, said pump is connected to said tank through connection means.

Preferably, said valve means can be operated, on command of said control unit, to convey the heated oil in said cooking chamber or to discharge the heated oil from said cooking chamber. The control unit therefore commands the actuation of the valve means to convey the heated oil into the cooking chamber, in order to carry out the frying process, or to discharge the oil from the tank, at the end of the frying process. The automated discharge of the oil from the cooking chamber to the tank is particularly advantageous because it allows the cooking chamber to be ready for subsequent use in a short time.

Preferably, said apparatus comprises a filtering device that prevents the passage of any impurities present in the oil towards said tank, following the frying process. The filtering device has the effect of increasing the life of the oil by preventing it from being contaminated by impurities, such as food residues.

Preferably, said filtering device is arranged at said connection means.

Preferably, said valve means comprise a first valve, arranged between said cooking chamber and said tank, said first valve being movable between a block configuration, in which it prevents the passage of the heated oil, and an activated configuration, in which it allows the passage of the heated oil between said cooking chamber and said tank.

Preferably, said first valve is arranged at said connection means.

Preferably, said first valve is bidirectional, that is said first valve can allow, if activated, the passage of oil from the tank to said cooking chamber or vice versa.

Preferably, said valve means comprise a second valve, arranged between said pump and said tank, said second valve being activable to put said pump in communication with said tank, in a step of filling said cooking chamber with a predetermined quantity of oil.

Preferably, said pump is adapted to suck air from the external environment and put said tank under pressure, to convey the heated oil toward said cooking chamber.

Preferably, a vent duct is associated with said tank to allow air to come out of said tank when it is necessary to refill the tank with oil following a frying process.

Preferably, said vent duct is equipped with a third valve to allow the air to be discharged from the tank or the flow of air leaving the tank to be blocked.

According to an advantageous aspect of the invention, said apparatus also comprises an assembly for distributing heated air adapted to convey heated air inside the cooking chamber.

Preferably said assembly for distributing heated air is controlled by said control unit.

Preferably, said distribution assembly comprises a ventilation device, connected to said cooking chamber, which is adapted to suck the air from said cooking chamber, and a heating device associated with said ventilation device, arranged to heat the air sucked from said cooking chamber.

Preferably, said ventilation device is arranged outside said casing.

Preferably, said distribution assembly comprises a distribution circuit to convey the heated air into said cooking chamber.

Preferably said distribution circuit comprises at least one inlet duct which connects said cooking chamber to said ventilation device.

Preferably, said distribution circuit comprises at least one delivery duct which connects said heating device to said cooking chamber.

Preferably, said ventilation device comprises an impeller and a motor, said impeller being rotated by said motor.

Preferably said superheater of said superheated steam generation device comprises at least one electrically conductive element which is powered, in use, to heat the steam up to a predetermined operating temperature.

Preferably, said electrically conductive element is powered by an electrical energy source at a temperature such as to emit electromagnetic radiation. The steam is heated up to the operating temperature by radiation.

According to an aspect of the invention, said heating device of said distribution assembly consists of said superheater of said device for generating superheated steam. This configuration is advantageous because it allows the air to be heated while ensuring, at the same time, a reduced dimensions of the apparatus and a simpler structure of the apparatus.

Preferably, relative valve means controlled by the control unit are interposed between said device for generating superheated steam and said cooking chamber.

Preferably, said valve means can be activated, on command of said control unit, between a closed configuration, in which they prevent the passage of superheated steam in said cooking chamber, and an open configuration, in which they put in communication said device for generating superheated steam with said cooking chamber.

Preferably, said apparatus comprises a container, suitable for supporting food, said container being removably associated with an internal wall of said cooking chamber.

Advantageously, said container is rotatably associated with said cooking chamber, said container being rotatable around an axis of rotation, during the cooking process. The container rotatably associated with an internal wall of the cooking chamber allows food to be rotated during cooking, exposing it to superheated steam or heated oil or air heated in a better way. In this way a greater homogeneity of cooking of the food is obtained.

Preferably, said container has a mesh structure that allows food to come into contact with the cooking fluid, be it oil, superheated steam or heated air.

### Description of drawings

The details of the invention will become more evident from the detailed description of a preferred embodiment of the apparatus for cooking food according to the invention, illustrated by way of example in the accompanying drawings, wherein:

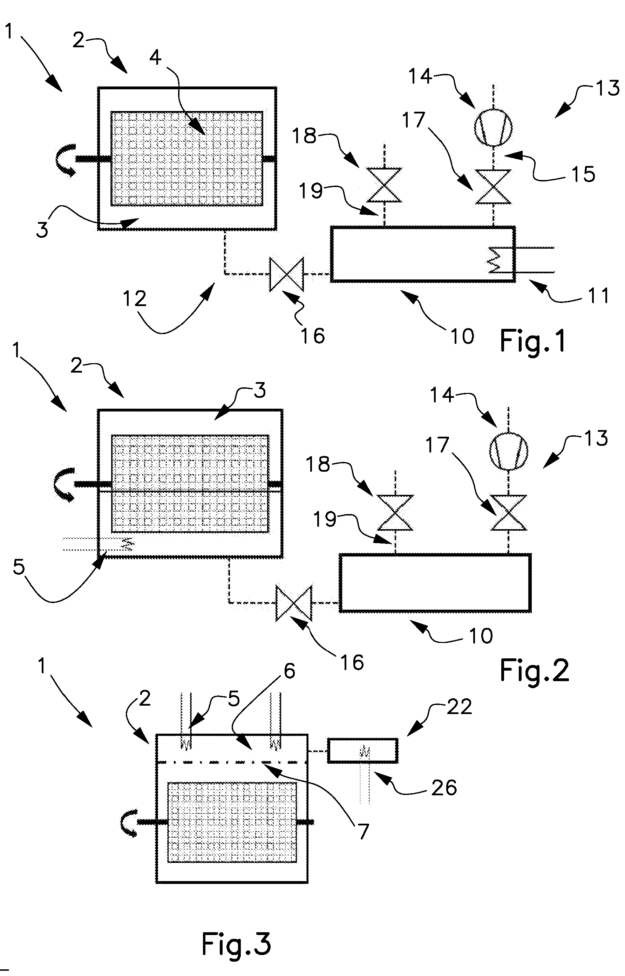

Figure 1 is a schematic top view of the apparatus object of the present invention in a first operational step;
Figure 2 is a schematic top view of the apparatus in a second operational step;
Figures 3 and 4 are respective schematic top views of the apparatus in which additional components are visible;
Figures 5 and 6 are respective schematic top views of different embodiments of the apparatus;

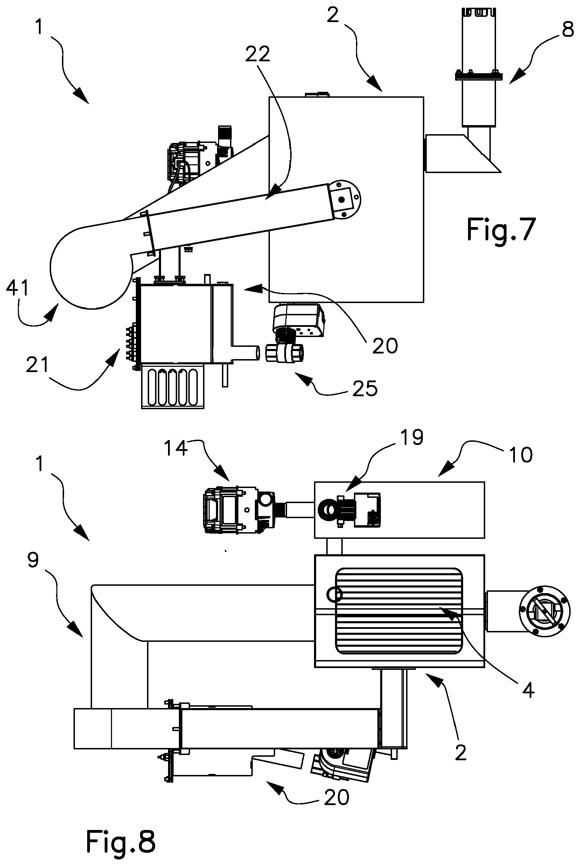

Figure 7 is a front view of the apparatus;
Figure 8 is a top view of the apparatus in which a component is shown in transparency;

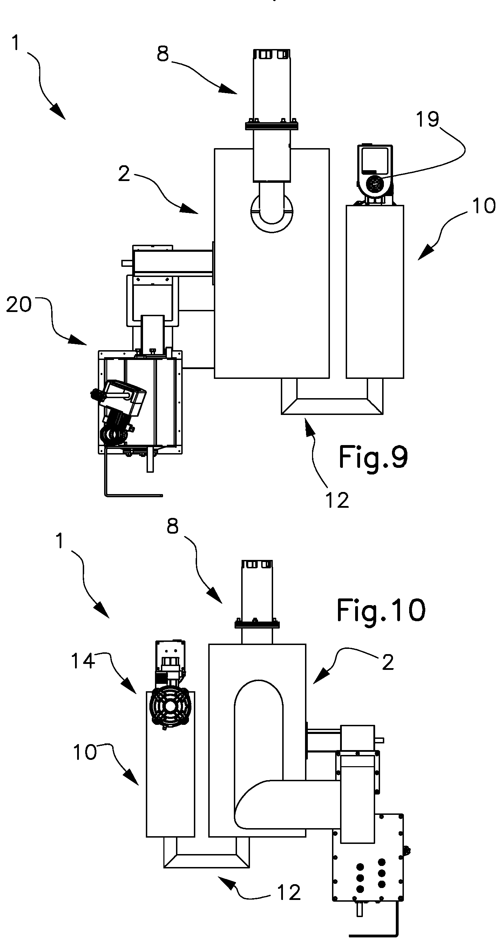

Figure 9 is a side view of the apparatus;
Figure 10 is a side view of the apparatus, shown from a side opposite to that visible in Figure 9.

### Description of embodiments of the invention

With particular reference to these figures, 1 indicates as a whole the apparatus for frying food, according to the present invention.

The apparatus 1 comprises a casing 2 which defines a cooking chamber 3 inside thereof, suitable for containing the food to be cooked.

The term food means fresh, frozen, precooked or pre-fried products.

The casing 2 may have a prismatic or cylindrical shape.

The casing 2 is associated with a control panel, not visible in the figures, which includes a series of commands, such as buttons, or a touch screen. The control panel permits to set the desired cooking method.

The casing 2 is provided with an opening, not visible in the figures, to allow the insertion of food in the chamber 3.

The opening is associated with a lid, also not shown, which is movable between a first configuration, in which it is spaced from the opening, and a second configuration, in which it is arranged close to the opening, creating a hermetic closure. More specifically, when the lid is in the second configuration, the cooking chamber 3 is insulated from the external environment.

The opening is preferably made on a portion of the casing 2 which is turned upwards in the configuration of use.

The cooking chamber 3 comprises, in use, a container 4 for supporting the food. The container 4 is removably associated with the cooking chamber 3.

The container 4 is made up of a basket having a mesh structure that allows the food to come into contact with the cooking fluid, be it oil, superheated steam or heated air, as explained below.

According to a preferred embodiment, the basket 4 is rotatably associated with the cooking chamber 3 and can be rotated around a rotation axis, helping to carry out uniform cooking of the food. The basket is associated with actuator means, not shown, which, when activated, rotates it around the rotation axis.

The rotation axis can be substantially horizontal.

At least one heating element 5 is arranged inside the cooking chamber 3, which can be activated, during the cooking step, to heat the fluid used for cooking.

Preferably the cooking chamber 3 comprises a series of heating elements 5 located, for example, on a bottom wall of the chamber 3.

Each heating element 5 comprises an electrical resistance.

Preferably, a diffuser 6 is mounted in the cooking chamber 3, which facilitates the distribution of heated air or superheated steam inside the chamber 3.

The diffuser member 6 is made up of a plate on which a series of openings 7 are made for the passage of the fluid.

The plate may form one of the walls of the cooking chamber 3.

The plate extends on a transverse plane with respect to a bottom wall of the chamber 3 and is mounted near an opening for the introduction of the superheated steam and/or hot air into the cooking chamber 3.

One or more sensors can be arranged at the cooking chamber 3, for example an oxygen sensor and a temperature sensor, both of which are not visible in the figures.

The cooking chamber 3 is provided with an opening to discharge the oxygen present inside thereof, not shown, which can be used if superheated steam is inserted. An discharge duct 8 is connected to the opening to convey oxygen to the outside.

The discharge duct 8 is provided with a regulator member 80 which can be activated to allow oxygen to come out.

The discharge duct 8 can also be used to let the superheated steam to come out from the cooking chamber 3.

Alternatively, it is possible to provide that the cooking chamber includes a further opening and an discharge duct, connected to the opening, for releasing the superheated steam.

Recirculation means 9 of the exhaust steam present in chamber 3 can be connected to the cooking chamber 3. The recirculation means 9 is communicating with the cooking chamber 3 and is configured to convey the exhaust steam from the cooking chamber to the device for generating superheated steam, in particular to the superheater, to heat the exhaust steam up to an operating temperature and bring it back into the cooking space 3. The recirculation means 9 comprises at least one recirculation duct which extends from a suitable opening made on one wall of the cooking chamber 3 to the superheater, which is described below.

The cooking chamber 3 is connected to a tank 10 arranged to contain a predetermined quantity of oil.

The tank 10 comprises heating means 11 adapted to heat the oil up to a predetermined temperature and to keep the oil at this temperature.

The heating means 11 comprises, for example, a plurality of electrical resistances.

Sensor means, not visible in the figures, are associated with the tank 10. Sensor means include at least a temperature sensor to monitor the temperature of the oil and, therefore, adjust the heating means 11. More specifically, the sensor means are configured to send data relating to the oil temperature to a control unit, as explained further below.

The tank 10 is arranged outside the cooking chamber 3 and is connected to the cooking chamber 3 by suitable connection means 12 comprising at least one duct.

The duct 12 is equipped with a filtering device, not shown in the figures, which is designed to prevent the passage of any impurities present in the oil between the chamber 3 and the tank 10, following a frying process.

Preferably the tank 10 is located in an underlying region with respect to the cooking chamber 3 to allow the passage of the oil from the cooking chamber 3 to the tank 10 using the force of gravity.

The tank 10 is insulated from the external environment in order to preserve the oil contained inside thereof.

The tank 10 is associated with a feeding assembly 13 which can be operated, on command of the control unit, to convey the oil from the tank 10 to the cooking chamber 3.

The control unit, not visible in the figures, is configured to control the apparatus 1 and, in particular, to send command signals to the feeding assembly 13 so as to command the insertion of a predetermined quantity of heated oil in the cooking chamber 3 and the discharge of oil from the cooking chamber 3 into the tank 10.

According to the invention, the control unit comprises an electronic processor and a memory that can be read by the electronic processor.

The memory of the control unit is capable of storing data relating to the cooking methods that the apparatus can perform. More specifically, these data relate to the steps of each cooking method implemented by the apparatus, for example the duration of the steps and their sequence.

The control unit is also configured to receive data from the sensor means, according to the invention at least the sensors of the tank 10 and preferably additionally of the cooking chamber 3, which are used to generate control signals. More specifically, the control unit controls heating means of the tank 10, based on the data sent by the sensor means, in order to keep the oil at a predetermined temperature, suitable for the frying process.

The feeding assembly 13 comprises a pump 14 and valve means.

The pump 14 is preferably a positive displacement pump.

The pump 14 is connected to the tank 10 through connection means 15 and is activated to suck air from the external environment and put the tank 10 under pressure in order to convey the heated oil from the tank 10 to the cooking chamber 3.

The valve means comprise a first regulating valve 16 interposed between the tank 10 and the cooking chamber 3, at the duct 12. The first valve 16 is movable between a block configuration, in which it prevents the passage of heated oil, and an activated configuration, in which it allows the oil to pass through the duct 12. The first regulating valve 16 is a bidirectional type valve.

The valve means also comprise a second valve 17 interposed between the pump 14 and the tank 10, which can be operated between a first configuration, in which it connects the pump 14 with the tank 10, and a second configuration, in which it interrupts the passage of the fluid between the pump 14 and the tank 10. The second valve 17 is arranged at the connection duct 15 between the pump 14 and the tank 10.

A third discharge valve 18 is also associated with the tank 10, which performs the function of allowing the discharge of the air contained in the tank 10, through a vent pipe 19, when it is necessary to refill the tank 10 with oil, as a result of a frying process carried out in the cooking chamber 3.

The apparatus also comprises a device 20 for generating superheated steam which is connected to the cooking chamber 3.

Additional valve means controlled by the control unit, which is not visible in the figures, are interposed between the device 20 for generating superheated steam and the cooking chamber 3.

These valve means can be activated between a closed configuration, in which they prevent the passage of superheated steam into the cooking chamber 3, and an open configuration, in which they connect the device 20 for generating superheated steam with the cooking chamber 3.

The device 20 for generating superheated steam is configured to generate a predetermined quantity of superheated steam to be introduced into the cooking chamber 3.

The control unit is adapted to selectively control the actuation of the feeding assembly 13 of the tank 10 of heated oil and of the device 20 for generating superheated steam to respectively insert a predetermined quantity of heated oil into the cooking chamber 3 or to insert a predetermined quantity of superheated steam into the cooking chamber 3.

According to the invention, the device 20 for generating superheated steam comprises a steam generation member 21 associated with a superheater 22.

The steam generation member 21 comprises a container 23 suitable for containing a predetermined amount of a liquid, and one or more heating elements 24, for example of the type of electric resistances, which are powered to evaporate the liquid and generate steam.

A liquid interception member 25 is associated with the container 23 to adjust the amount of liquid to be inserted inside the container 23.

The liquid is preferably water.

The superheater 22 comprises at least one electrically conductive element 26, adapted to heat the steam up to an operating temperature which can reach 600 °C. The temperature is preferably between 100 °C and 600 °C.

According to an embodiment, not visible in the figures, the superheater 22 comprises a containment body comprising inside it at least one channel for the passage of steam.

Preferably, the containment body is made of a metal material.

The containment body comprises a support member made of a non-electrically conductive material. The support member can be made, for example, of a ceramic material.

The support member is inserted inside the containment body and is spaced from the internal wall of the containment body, defining an opening.

The support member has at least one through channel, through which the steam passes. The at least one through channel preferably extends from one end of the support member to an opposite end.

The at least one electrically conductive element 26 is arranged in the at least one through channel.

The electrically conductive element 26 comprises an electrically conductive filament which is powered by a source of electrical energy at a temperature such that it emits electromagnetic radiation. The steam is heated up to the operating temperature by radiation.

The operation of the apparatus can be easily understood from the above description.

**In** an initial step, the user turns on the apparatus and open the lid to insert the basket 4 containing the food inside the casing 2, in the cooking chamber 3. The user then closes the lid, making a hermetic closure of the cooking chamber 3.

The user sets the desired cooking method using the control panel, involving, for example, a pre-treatment of food, a specific type of desired cooking and a post-treatment. It is obviously possible to set a single type of cooking, without pre-treatment or post-treatment of the food or to set only a pre-treatment or a post-treatment.

**In** the event that frying is selected as the cooking mode, the control unit commands the operation of the feeding assembly 13 to allow the passage of the heated oil from the tank 10 to the cooking chamber 3. The oil is kept in the tank 10 at the suitable temperature by the heating means 11.

In particular, the control unit commands the switching on of the pump 14 and the activation of the second valve 17 in the configuration in which it connects the pump 14 with the tank 10. The first valve 16 is also activated to allow the passage of the heated oil from the tank 10 to the cooking chamber 3, through the duct 12.

In this step, the pump 14 draws air from the external environment and puts the tank 10 under pressure, conveying the oil through the duct 12 towards the cooking chamber 3. Once the cooking chamber 3 has been filled with heated oil, the first regulation valve 16 is operated in the closed configuration and the food is fried with oil.

The basket 4 is rotated during frying to favor a homogeneous cooking of the food.

When the frying process is finished, the control unit controls the oil drain from the cooking chamber 3 to the tank 10. More specifically, the first valve 16 is activated again to let the oil flow towards the tank 10, using the force of gravity. At the same time, the third discharge valve 18 is open to expel the air contained in the tank 10 to the external environment. The second valve 17 is instead in the configuration in which it prevents communication between the pump 14 and the tank 10.

If a cooking method is selected which involves treating the food with superheated steam, for example before the frying process or after the frying process, the control unit controls the operation of the device for generating superheated steam 20 and the valve means, interposed between the device for generating superheated steam and the cooking chamber 3, to insert a predetermined quantity of superheated steam into the cooking chamber 3.

At the end of the superheated steam treatment, the steam is expelled from the cooking chamber 3 through the discharge duct 8.

According to an aspect of the invention, the apparatus also includes an assembly 40 for distributing heated air which is designed to insert a predetermined amount of heated air inside the cooking chamber 3.

The distribution assembly 40 comprises a ventilation device 41 connected to the cooking chamber 3, which is adapted to suck air from the cooking chamber 3. A heating device is associated with the ventilation device 41, which has the function of heating the air up to a predetermined temperature.

The distribution assembly 40 also includes a distribution circuit 42 to convey the heated air to the cooking chamber 3.

The ventilation device 41 comprises an impeller, arranged outside the cooking chamber 3, and a motor, adapted to rotate the impeller.

The impeller can be rotated by the motor member, on command of the control unit, to suck air from the cooking chamber 3 and convey it to the heating device.

The distribution circuit 42 comprises at least one inlet duct 42a which connects the cooking chamber 3 to the ventilation device 41 and at least one delivery duct 42b which connects the heating device to the cooking chamber 3. The circuit may comprise a further delivery duct for connecting the ventilation device 41 with the heating device.

The inlet duct 42a is equipped with valve means 43 which may be activated to connect the impeller of the ventilation device 41 to the cooking chamber 3.

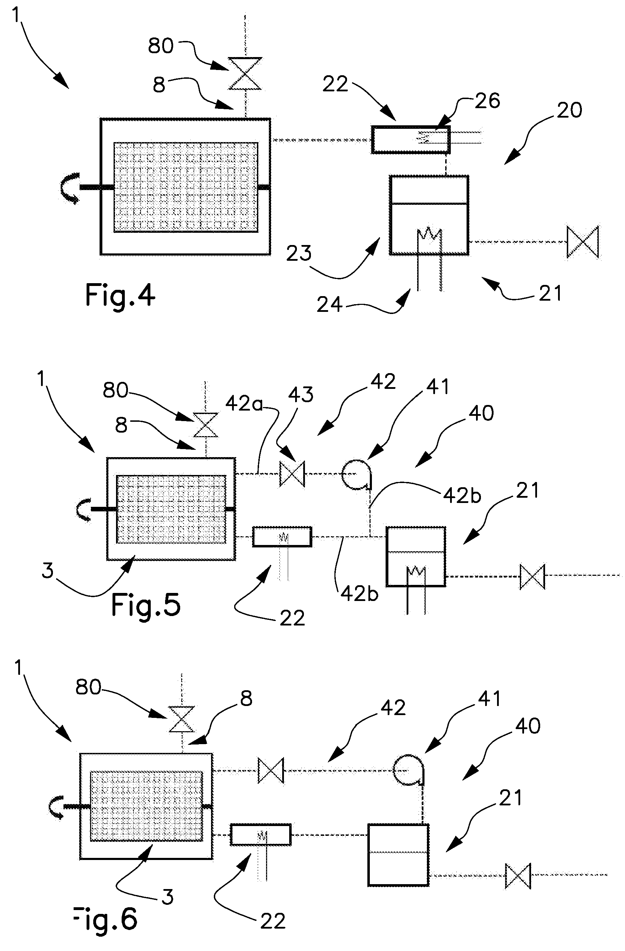

According to a preferred embodiment, the heating device consists of the superheater 22 (see Figures 5 and 6). **In** this way it is possible to use the superheater 22 to heat the air with a consequent advantage in terms of reduced dimensions and a simpler structure of the apparatus. Furthermore, a further advantage is the possibility of heating the air to a relatively high temperature thanks to the superheater 22. This temperature, preferably, is between 150 °C and 450 °C.

The ventilation device 41 may be connected directly to the superheater 22 (see Figure 5). Alternatively, the ventilation device 41 is connected to the device for generating steam 21 and, therefore, the air sucked in by the impeller passes through the steam generator 21 before reaching the superheater 22, in which heating takes place (see Figure 6).

The heating elements 5 of the cooking chamber 3 contribute to the heating of the air introduced into the cooking chamber 3.

The operation of the apparatus according to this embodiment does not differ from the operation already described, with the exception of the further possibility of cooking food with heated air.

If the selected cooking method involves treating the food with heated air, the control unit controls the activation of valve means 43 and the rotation of the impeller, which sucks the air from the cooking chamber 3. The sucked air is conducted up to the heating device where the air is heated. The heated air is then introduced into the cooking chamber 3.

The apparatus according to the present invention achieves the aim of optimally carrying out different types of food cooking thanks to the provision of a tank containing heated oil and a device for generating superheated steam connected to the cooking chamber. In particular, the provision of an oil tank and a separate cooking chamber, suitable for containing food, allows frying in oil and cooking with superheated steam separately, with a consequent improvement in the quality of frying, as there is no interaction between the oil and the steam. Furthermore, the possibility of treating food with superheated steam improves the healthiness of the food.

It should be considered that the lack of interaction between the oil and the superheated steam makes maintenance of the apparatus easier, since the lack of interaction between the oil and the superheated steam limits the degradation of the oil and it is necessary to replace the oil less frequently.

A prerogative of the invention is the provision of a control unit, which controls the supply of oil from the tank to the chamber or activates the device for generating superheated steam for carrying out the frying with oil and cooking with superheated steam. This characteristic therefore enables the two types of cooking to be carried out separately, automatically, allowing the different treatments to be implemented in sequence, if predetermined characteristics of the food are to be obtained.

In addition, the provision of a filtering device at the means of connection of the tank to the cooking chamber prevents food residues from contaminating the oil, helping to increase its useful life.

It must also be considered that the user recover the oil from the relative insulated tank when he needs to replace it, therefore the risk of burns is reduced and thus the safety of the apparatus increases.

Finally, it should be emphasized that, according to the embodiment of the apparatus comprising an assembly for distributing heated air, it is possible to carry out, in addition to frying and cooking with superheated steam, cooking with hot air. Therefore, the apparatus is more versatile, allowing cooking to be better adapted to the type of food.

The apparatus described by way of example is subject to changes within the scope of the appended claims, according to different needs.

In the practical embodiment of the invention, the used materials, as well as the shape and the dimensions, may be modified within the scope of the appended claims, depending on needs.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. An apparatus for frying food comprising
a casing (2) which defines a cooking chamber (3) inside thereof, suitable for containing said food;
a tank (10) connected to said cooking chamber (3), adapted to contain a predetermined quantity of oil, said tank (10) comprising heating means (11) for heating said oil and sensor means for monitoring the temperature of said oil, said sensor means being configured to send data relating to the temperature of said oil to a control unit;
a device for generating superheated steam (20) connected to said cooking chamber (3), said device for generating superheated steam (20) comprising a steam generating member (21) associated with a superheater (22), said device for generating superheated steam (20) being configured to generate a predetermined quantity of superheated steam to be introduced into said cooking chamber (3);
a feeding assembly (13) connected to said tank (10), said feeding assembly being activated, on command of said control unit, to convey said heated oil from said tank (10) to said cooking chamber (3);
said control unit comprising an electronic processor and a memory readable by the electronic processor, said control unit being configured to control said heating means, based on the data sent by said sensor means, so as to maintain said oil at a predetermined temperature, said control unit also being configured to selectively control said feeding assembly (13) to supply a predetermined quantity of heated oil to said cooking chamber (3), or said device for generating superheated steam (20) to insert a predetermined quantity of superheated steam into said cooking chamber (3).

2. The apparatus of claim 1, wherein said feeding assembly (13) comprises a pump (14), connected to said tank (10) and valve means (16, 17, 18), said control unit being configured to control said valve means (16, 17, 18) for conveying the heated oil from said tank (10) to said cooking chamber (3) and to discharge the heated oil from said cooking chamber (3) into said tank (10).

3. The apparatus of claim 2, wherein said valve means (16, 17, 18) comprise a first valve (16) arranged between said cooking chamber (3) and said tank (10), said first valve (16) being movable between a block configuration, in which it prevents the passage of the heated oil, and an activated configuration, in which it allows the passage of the heated oil between said cooking chamber (3) and said tank (10).

4. The apparatus of claim 3, wherein said first valve (16) is bidirectional.

5. The apparatus of claim 2, 3 or 4, **characterized in that** it comprises a filtering device to prevent the passage of any impurities present in the oil between said cooking chamber (3) and said tank (10).

6. The apparatus of any one of the preceding claims, wherein it comprises an assembly (40) for distributing heated air configured to insert a predetermined amount of heated air inside said cooking chamber (3).

7. The apparatus of claim 6, wherein said assembly (40) for distributing heated air comprises a ventilation device (41) connected to said cooking chamber (3), adapted to suck air from said cooking chamber (3), a heating device associated with said ventilation device (41) arranged to heat said air sucked from said cooking chamber (3), and a distribution circuit (42) to convey said heated air into said cooking chamber (3).

8. The apparatus of claim 7, wherein said heating device is constituted by said superheater (22).

9. The apparatus of any one of the preceding claims, wherein said tank (10) is arranged in an underlying region with respect to said cooking chamber (3) for discharging said heated oil from said cooking chamber (3) to said tank (10) using the force of gravity.

10. The apparatus of any one of the preceding claims, wherein it comprises a container (4) adapted to support food, said container being removably associated with an internal wall of said cooking chamber (3), said container (4) being able to rotate around an axis of rotation during the cooking process.

## Patentansprüche

1. Vorrichtung zum Frittieren von Lebensmitteln, umfassend:
ein Gehäuse (2), das in seinem Inneren eine Garkammer (3) definiert, die zum Aufnehmen des Lebensmittels geeignet ist;
einen mit der Garkammer (3) verbundenen Tank (10), der zum Aufnehmen einer vorbestimmten Menge an Öl angepasst ist, wobei der Tank (10) Heizmittel (11) zum Erhitzen des Öls und Sensormittel zum Überwachen der Temperatur des Öls umfasst, wobei die Sensormittel dazu konfiguriert sind, Daten in Bezug auf die Temperatur des Öls an eine Steuereinheit zu senden;
ein mit der Garkammer (3) verbundenes Gerät zum Erzeugen von überhitztem Dampf (20), wobei das Gerät zum Erzeugen von überhitztem Dampf (20) ein Dampferzeugungselement (21) umfasst, das einem Überhitzer (22) zugeordnet ist, wobei das Gerät zum Erzeugen von überhitztem Dampf (20) dazu konfiguriert ist, eine vorbestimmte Menge an überhitztem Dampf zu erzeugen, die in die Garkammer (3) eingeführt wird;
eine Zuführanordnung (13), die mit dem Tank (10) verbunden ist, wobei die Zuführanordnung auf Befehl der Steuereinheit aktiviert wird, um das erhitzte Öl aus dem Tank (10) in die Garkammer (3) zu befördern;
wobei die Steuereinheit einen elektronischen Prozessor und einen von dem elektronischen Prozessor lesbaren Speicher umfasst, wobei die Steuereinheit dazu konfiguriert ist, die Heizmittel basierend auf den von den Sensormitteln gesendeten Daten so zu steuern, dass das Öl auf einer vorbestimmten Temperatur gehalten wird, wobei die Steuereinheit auch dazu konfiguriert ist, die Zuführanordnung (13) selektiv so zu steuern, dass sie der Garkammer (3) eine vorbestimmte Menge an erhitztem Öl zuführt, oder das Gerät zum Erzeugen von überhitztem Dampf (20) so zu steuern, dass es eine vorbestimmte Menge an Heißdampf in die Garkammer (3) einzuführen.

2. Vorrichtung nach Anspruch 1, wobei die Zuführanordnung (13) eine Pumpe (14) umfasst, die mit dem Tank (10) und Ventilmitteln (16, 17, 18) verbunden ist, wobei die Steuereinheit dazu konfiguriert ist, die Ventilmitteln (16, 17, 18) zu steuern, um das erhitzte Öl aus dem Tank (10) in die Garkammer (3) zu befördern und das erhitzte Öl aus der Garkammer (3) in den Tank (10) abzulassen.

3. Vorrichtung nach Anspruch 2, wobei die Ventilmittel (16, 17, 18) ein erstes Ventil (16) umfassen, das zwischen der Garkammer (3) und dem Tank (10) angeordnet ist, wobei das erste Ventil (16) zwischen einer Sperrkonfiguration, in der es den Durchgang des erhitzten Öls verhindert, und einer aktivierten Konfiguration, in der es den Durchgang des erhitzten Öls zwischen der Garkammer (3) und dem Tank (10) ermöglicht, bewegbar ist.

4. Vorrichtung nach Anspruch 3, wobei das erste Ventil (16) bidirektional ist.

5. Vorrichtung nach Anspruch 2, 3 oder 4, **dadurch gekennzeichnet, dass** es ein Filtergerät umfasst, um den Durchgang von in dem Öl vorhandenen Verunreinigungen zwischen der Garkammer (3) und dem Tank (10) zu verhindern.

6. Vorrichtung nach einem der vorstehenden Ansprüche, wobei sie eine Anordnung (40) zum Verteilen von erwärmter Luft umfasst, die dazu konfiguriert ist, eine vorbestimmte Menge erwärmter Luft in die Garkammer (3) einzuführen.

7. Vorrichtung nach Anspruch 6, wobei die Anordnung (40) zum Verteilen von erwärmter Luft ein mit der Garkammer (3) verbundenes Belüftungsgerät (41) umfasst, das zum Ansaugen von Luft aus der Garkammer (3) angepasst ist, ein dem Belüftungsgerät (41) zugeordnetes Heizgerät, das zum Erhitzen der aus der Garkammer (3) angesaugten Luft angepasst ist, und einen Verteilerkreis (42), der die erhitzte Luft in die Garkammer (3) leitet.

8. Vorrichtung nach Anspruch 7, wobei das Heizgerät durch den Überhitzer (22) gebildet ist.

9. Vorrichtung nach einem der vorstehenden Ansprüche, wobei der Tank (10) in einem Bereich unterhalb der Garkammer (3) angeordnet ist, um das erhitzte Öl unter Verwendung der Schwerkraft aus der Garkammer (3) in den Tank (10) abzulassen.

10. Vorrichtung nach einem der vorstehenden Ansprüche, wobei sie einen Behälter (4) umfasst, der zum Tragen von Lebensmittel angepasst ist, wobei der Behälter entfernbar mit einer Innenwand der Garkammer (3) verbunden ist, wobei der Behälter (4) in der Lage ist, sich während des Kochvorgangs um eine Drehachse zu drehen.

## Revendications

1. Appareil pour frire des aliments comprenant :
un boîtier (2) qui définit une chambre de cuisson (3) à l'intérieur de celui-ci, approprié pour contenir lesdits aliments ;
un réservoir (10) relié à ladite chambre de cuisson (3), adapté pour contenir une quantité prédéterminée d'huile, ledit réservoir (10) comprenant des moyens de chauffage (11) pour chauffer ladite huile et des moyens de capteur pour surveiller la température de ladite huile, lesdits moyens de capteur étant configurés pour envoyer des données relatives à la température de ladite huile à une unité de commande ;
un dispositif de génération de vapeur surchauffée (20) relié à ladite chambre de cuisson (3), ledit dispositif de génération de vapeur surchauffée (20) comprenant un élément de génération de vapeur (21) associé à un surchauffeur (22), ledit dispositif de génération de vapeur surchauffée (20) étant configuré pour générer une quantité prédéterminée de vapeur surchauffée à introduire dans ladite chambre de cuisson (3) ;
un ensemble d'alimentation (13) relié audit réservoir (10), ledit ensemble d'alimentation étant activé, sur ordre de ladite unité de commande, pour transporter ladite huile chauffée depuis ledit réservoir (10) jusqu'à ladite chambre de cuisson (3) ;
ladite unité de commande comprenant un processeur électronique et une mémoire lisible par le processeur électronique, ladite unité de commande étant configurée pour commander lesdits moyens de chauffage, sur la base des données envoyées par lesdits moyens de capteur, de manière à maintenir ladite huile à une température prédéterminée, ladite unité de commande étant également configurée pour commander sélectivement ledit ensemble d'alimentation (13) pour fournir une quantité prédéterminée d'huile chauffée à ladite chambre de cuisson (3), ou ledit dispositif de génération de vapeur surchauffée (20) pour insérer une quantité prédéterminée de vapeur surchauffée dans ladite chambre de cuisson (3).

2. Appareil selon la revendication 1, dans lequel ledit ensemble d'alimentation (13) comprend une pompe (14), reliée audit réservoir (10) et des moyens de soupape (16, 17, 18), ladite unité de commande étant configurée pour commander lesdits moyens de soupape (16, 17, 18) pour transporter l'huile chauffée depuis ledit réservoir (10) jusqu'à ladite chambre de cuisson (3) et pour décharger l'huile chauffée de ladite chambre de cuisson (3) dans ledit réservoir (10).

3. Appareil selon la revendication 2, dans lequel lesdits moyens de soupape (16, 17, 18) comprennent une première soupape (16) agencée entre ladite chambre de cuisson (3) et ledit réservoir (10), ladite première soupape (16) étant mobile entre une configuration de bloc, dans laquelle elle empêche le passage de l'huile chauffée, et une configuration activée, dans laquelle elle permet le passage de l'huile chauffée entre ladite chambre de cuisson (3) et ledit réservoir (10).

4. Appareil selon la revendication 3, dans lequel ladite première soupape (16) est bidirectionnelle.

5. Appareil selon la revendication 2, 3 ou 4, **caractérisé en ce qu'**il comprend un dispositif de filtration pour empêcher le passage de toute impureté présente dans l'huile entre ladite chambre de cuisson (3) et ledit réservoir (10).

6. Appareil selon l'une quelconque des revendications précédentes, dans lequel il comprend un ensemble (40) de distribution d'air chauffé configuré pour insérer une quantité prédéterminée d'air chauffé à l'intérieur de ladite chambre de cuisson (3).

7. Appareil selon la revendication 6, dans lequel ledit ensemble (40) de distribution d'air chauffé comprend un dispositif de ventilation (41) relié à ladite chambre de cuisson (3), adapté pour aspirer de l'air à partir de ladite chambre de cuisson (3), un dispositif de chauffage associé audit dispositif de ventilation (41) agencé pour chauffer ledit air aspiré à partir de ladite chambre de cuisson (3), et un circuit de distribution (42) pour transporter ledit air chauffé dans ladite chambre de cuisson (3).

8. Appareil selon la revendication 7, dans lequel ledit dispositif de chauffage est constitué par ledit surchauffeur (22).

9. Appareil selon l'une quelconque des revendications précédentes, dans lequel ledit réservoir (10) est agencé dans une région sous-jacente par rapport à ladite chambre de cuisson (3) pour décharger ladite huile chauffée depuis ladite chambre de cuisson (3) vers ledit réservoir (10) en utilisant la force de gravité.

10. Appareil selon l'une quelconque des revendications précédentes, dans lequel il comprend un récipient (4) adapté pour supporter des aliments, ledit récipient étant associé de manière amovible à une paroi interne de ladite chambre de cuisson (3), ledit récipient (4) pouvant tourner autour d'un axe de rotation pendant le processus de cuisson.
